# EUROPEAN PATENT APPLICATION

(11) **EP 2 052 980 A1**
(43) Date of publication of application: **29.04.2009**
(21) Application number: 07791968.6
(22) Date of filing: 03.08.2007
(51) Int. Cl.: B65B 61/06, B26D 7/08, B65B 15/04, B65B 61/16

(54) **COMMODITY MANUFACTURING DEVICE**

(30) Priority: 08.08.2006 JP 2006216249
(71) Applicant: ISHIDA CO., Ltd., Kyoto-shi, Kyoto 606-8392 (JP)
(72) Inventor: IWASAKI, Yoshio, c/o ISHIDA CO., LTD., Shiga 520-3026 (JP); YAMAMOTO, Akira, c/o ISHIDA CO., LTD., Shiga 520-3026 (JP)
(74) Representative: Skone James, Robert Edmund
(86) International application number: PCT/JP2007/065295
(87) International publication number: WO 2008/018391

(57) **Abstract**

The present invention relates to a product manufacturing apparatus, more specifically to a product manufacturing apparatus that performs at least one of cutting and punching of a sheet material, and aims to prevent attachment of a fragment of the sheet material to a blade when at least one of cutting and punching of the sheet material is performed. In order to achieve the above described object, a product manufacturing apparatus (1; 101) includes a blade (62a, 62b; 1942a, 1942c) and a liquid supply device (7, 61 c, 61 d; 197). The blade performs at least one of cutting and punching of at least one of a sheet material (S) attached to a packaged item and a sheet material as a component of a packaged item. The liquid supply device supplies liquid to the blade.

## Description

### TECHNICAL FIELD

The present invention relates to a product manufacturing apparatus. More specifically, the present invention relates to a product manufacturing apparatus which performs at least one of cutting and punching of a sheet material.

### BACKGROUND ART

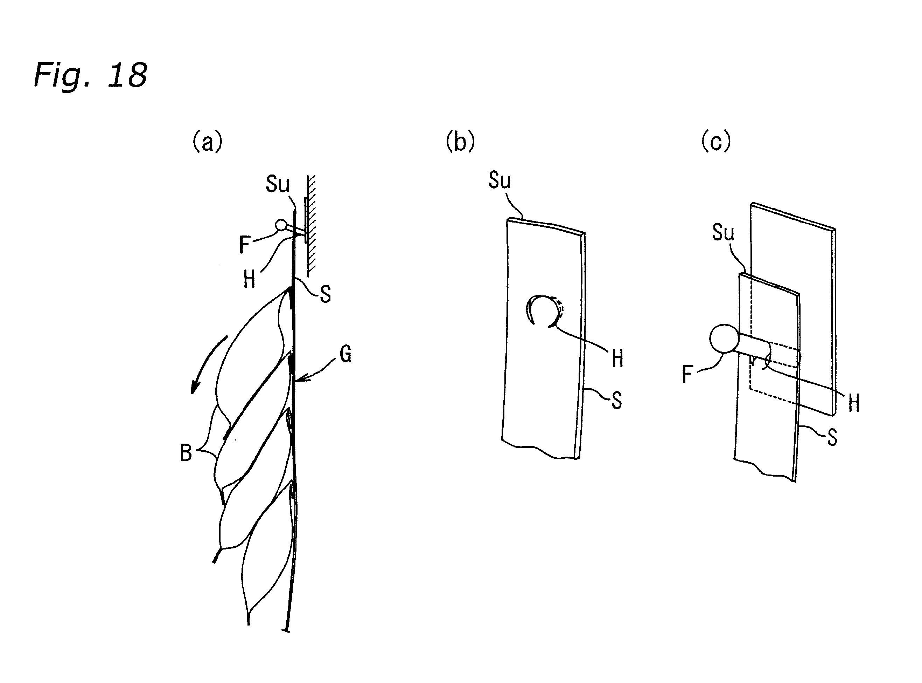

Conventionally, as shown in Figure 18(a), a suspended product G in which a plurality of bags B are adhesively attached at predetermined intervals to one side of a plastic sheet material S is employed as a form of display at retail stores for selling packaged items whose package is made of plastic film. A purchaser takes the individual packaged item of the suspended product G by pulling it off from the sheet material S. The suspended product G is commonly called a strip pack.

As shown in Figure 18(b), the suspended product G is provided with a suspension hole H on an upper end Su side of the sheet material S. As shown in Figure 18(c), the suspended product G is displayed suspended from a peg F. Such technology is disclosed, for example, in patent document 1 listed below.

A purchaser of the packaged item grasps the bag B with the hand and pulls it down in the arrow direction in Figure 18(a). Thereby the purchaser can remove the bag B from the sheet material S. In some cases, the purchaser may decide to return the bag after pulling it off so as not to buy the packaged item.

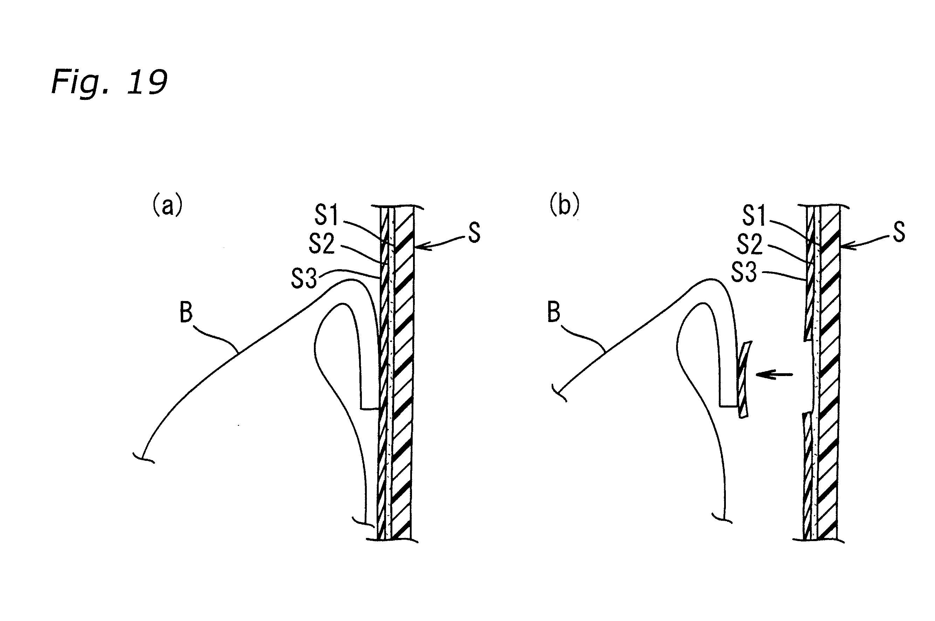

Thus, as the sheet material S, a sheet material having adhesive capable of adhesively reattaching the bag B is employed. As shown in Figure 19(a), this sheet material S has an adhesive layer S2 on one side of a base material layer S 1 that forms the main body, and a covered layer S3 to which the bag B is adhesively attached (welded) to the front surface side of the adhesive layer S2. Additionally, as shown in Figure 19(b), part of the covered layer S3 is torn off with the bag B when the bag B is removed, and thus the front surface side of the adhesive layer S2 becomes exposed.

Accordingly, a purchaser of the packaged item can adhesively reattach the bag B that the purchaser decided not to buy to the exposed adhesive layer S2 by pressing the bag B on the front surface of the adhesive layer S2 and can therefore return the bag B on the sheet material S.
<Patent Document 1> JP Application Publication No. 2005-271986

### DISCLOSURE OF THE INVENTION

### <OBJECT TO BE ACHIEVED BY THE INVENTION>

However, there is a problem, i.e., when the process of cutting the upper end Su and the process of punching the suspension hole H are performed on the sheet material S to which a plurality of bags B are adhesively attached, a fragment of the sheet material S attaches to a blade such as a cutting blade, hole punch blade, or the like. For example, the adhesive that forms the adhesive layer S2 sticks to the cutting blade and the hole punch blade.

When a fragment of the sheet material S attaches to the blade, the sharpness of the blade is reduced and consequently cutting and punching cannot be normally performed.

It is conceivable to apply a coating on the blade edge of the blade in order to prevent attachment of the adhesive. However, it is not so desirable because the sharpness is reduced due to the coating.

The present invention is made in light of the above described problems. An object of the present invention is to prevent attachment of a fragment of a sheet material to a blade when at least one of cutting and punching of the sheet material is performed.

### <MEANS TO ACHIEVE THE OBJECT>

A product manufacturing apparatus according to a first aspect of the present invention is a product manufacturing apparatus that manufactures a packaged item, the product manufacturing apparatus including a blade and a liquid supply device. The blade performs at least one of cutting and punching of at least one of a sheet material attached to the packaged item and a sheet material as a component of the packaged item. The liquid supply device supplies liquid to the blade.

A product manufacturing apparatus according to a second aspect of the present invention is the product manufacturing apparatus according to the first aspect of the present invention, wherein the product manufacturing apparatus manufactures a suspended product in which a plurality of packaged items are suspended from the sheet material. The sheet material is a sheet-like member to which the plurality of packaged items are attached, and the sheet material includes adhesive.

A product manufacturing apparatus according to a third aspect of the present invention is the product manufacturing apparatus according to the second aspect of the present invention, wherein the blade performs at least one of cutting and punching of the sheet material in the direction from below the sheet material to thereabove. The liquid supply device applies the liquid to the blade in the area below the sheet material. The sheet material includes a base material layer and the adhesive applied to one side of the base material layer, and is conveyed with the one side of the base material layer facing up.

A product manufacturing apparatus according to a fourth aspect of the present invention is the product manufacturing apparatus according to the third aspect of the present invention, further including a case for covering the blade in the area below the sheet material.

A product manufacturing apparatus according to a fifth aspect of the present invention is the product manufacturing apparatus according to the third or fourth aspect of the present invention, wherein the liquid is water and the adhesive is hydrophobic.

A product manufacturing apparatus according to a sixth aspect of the present invention is the product manufacturing apparatus according to any one of the second through fifth aspects of the present invention, wherein the liquid supply device supplies the liquid to the blade once after each time at least one of cutting and punching is performed a predetermined number of times.

A product manufacturing apparatus according to a seventh aspect of the present invention is the product manufacturing apparatus according to any one of the second through sixth aspects of the present invention, wherein two of the blades are provided. One blade is a cutting blade to cut the sheet material. The other blade is a hole punch blade to punch the sheet material. The liquid supply device supplies the liquid concurrently to both the cutting blade and the hole punch blade.

A product manufacturing apparatus according to an eighth aspect of the present invention is the product manufacturing apparatus according to any one of the first through seventh aspects of the present invention, wherein the liquid supply device is a sprayer that sprays the liquid to the blade.

A product manufacturing apparatus according to a ninth aspect of the present invention is the product manufacturing apparatus according to any one of the first through seventh aspects of the present invention, wherein the liquid supply device is a liquid absorbing member in which the liquid is absorbed.

A product manufacturing apparatus according to a tenth aspect of the present invention is the product manufacturing apparatus according to the ninth aspect of the present invention, wherein the liquid absorbing member is arranged on a path along which the blade moves.

### <EFFECTS OF THE INVENTION>

With the product manufacturing apparatus according to the first aspect of the present invention, because the liquid is supplied to the blade by the liquid supply device, the liquid is provided between the sheet material and the blade when cutting and punching of the sheet material are performed. Accordingly, the blade is prevented from coming into direct contact with the sheet material. Thus, a fragment of the sheet material that was generated at the time of cutting and punching can be prevented from attaching to the blade, and thus the keen sharpness of the blade can be maintained.

With the product manufacturing apparatus according to the second aspect of the present invention, the attachment of the adhesive to the blade can be prevented.

With the product manufacturing apparatus according to the third aspect of the present invention, because the liquid is supplied below the base material layer with the adhesive on the base material layer facing up, the adhesive is substantially prevented from being wet by the liquid supplied. Thus, it is possible to prevent deterioration of the adhesive strength of the adhesive, and the packaged item that was removed from the sheet material can be adhesively reattached to the sheet material.

With the product manufacturing apparatus according to the fourth aspect of the present invention, because the blade is covered by the case, the humidity in the case increases due to the liquid sprayed to the blade. Therefore, the blade does not easily get dry, and thus the attachment of the adhesive to the blade can be easily prevented.

With the product manufacturing apparatus according to the fifth aspect of the present invention, because the adhesive is hydrophobic, even if the adhesive is wet by the water supplied, the water is prevented from penetrating into the adhesive. Thus, it is possible to prevent deterioration of the adhesive strength of the adhesive. Further, water can be easily provided between the blade and the adhesive because the water attached on the blade is repelled by the hydrophobic adhesive. Thus, it becomes easier to prevent attachment of the adhesive to the blade.

With the product manufacturing apparatus according to the sixth aspect of the present invention, the liquid supply device supplies the liquid to the blade once after each time at least one of repetitive cutting and punching is performed a predetermined number of times. Thus, it is possible to prevent a large amount of liquid from attaching to the front surface side of the adhesive and to prevent the liquid from penetrating into the adhesive.

With the product manufacturing apparatus according to the seventh aspect of the present invention, because it is possible to apply the liquid to both the cutting blade and the hole punch blade at one time, the same mechanism and control system for supplying the liquid can be shared for both blades, and thus the cost can be reduced.

With the product manufacturing apparatus according to the eighth aspect of the present invention, it is possible to supply the liquid to the blade without the sprayer coming into direct contact with the blade. Thus, it is possible to prevent wear and damage of the blade and the sprayer.

With the product manufacturing apparatus according to the ninth aspect of the present invention, because the liquid is supplied to the blade by causing the liquid absorbing member to come into contact with the blade, it is possible to entirely apply the liquid to any desired portion of the blade simply by designing the liquid absorbing member in appropriate shape, size, and the like.

With the product manufacturing apparatus according to the tenth aspect of the present invention, it is possible to supply the liquid to the blade simply by moving the blade by arranging the liquid absorbing member on the path along which the blade moves. Therefore, there is no need to provide a separate driving mechanism for causing the liquid absorbing member to come into contact with the blade.

The objects, characteristics, aspects, and advantages of this invention will become clearer with the detailed description below and the attached drawings.

### BRIEF DESCRIPTION OF THE DRAWINGS

Figure 1 is a view to conceptually show a suspended product manufacturing apparatus according to a first embodiment.
Figure 2 is an enlarged view around a guide unit of the suspended product manufacturing apparatus.
Figure 3 is an enlarged cross-sectional view of the guide unit of the suspended product manufacturing apparatus.
Figure 4 is a view to show a cross section of the guide unit taken along line IV-IV in Figure 3.
Figure 5 is an enlarged cross-sectional view of a guide unit of a suspended product manufacturing apparatus according to a first alternative embodiment of the first embodiment.
Figure 6 is a view to show a cross section of the guide unit taken along line VI-VI in Figure 5.
Figure 7 is an enlarged cross-sectional view of a guide unit of a suspended product manufacturing apparatus according to a second alternative embodiment of the first embodiment.
Figure 8 is an enlarged view of sealing units 51 of a sealing mechanism 17 according to a third alternative embodiment of a second embodiment.
Figure 9 is a perspective view to conceptually show a suspended product manufacturing apparatus according to the second embodiment.
Figure 10 is a side view to conceptually show the suspended product manufacturing apparatus.
Figure 11 is a partially enlarged view of the suspended product manufacturing apparatus.
Figure 12 is a view to show a packaged item and a suspended product.
Figure 13 is a view of a brush unit seen from above.
Figure 14(a) is a view of a grasp unit seen from the side before a seal portion is grasped; and Figure 14(b) is a view of the grasp unit seen from the side with the seal portion being grasped.
Figure 15 is a view of the suspended product manufacturing unit seen from the side.
Figure 16 is a view of the suspended product manufacturing unit seen from the above.
Figure 17 is a view to conceptually show a guide unit 194.
Figure 18 is a view to conceptually show the suspended product.
Figure 19 is a view to conceptually show a sheet material used for the suspended product.

### BEST MODE FOR CARRYING OUT THE INVENTION

### 1. FIRST EMBODIMENT

Below, a suspended product manufacturing apparatus that is a product manufacturing apparatus according to an embodiment of the present invention is described with reference to the drawings.

### 1-1. STRUCTURE OF THE SUSPENDED PRODUCT MANUFACTURING APPARATUS

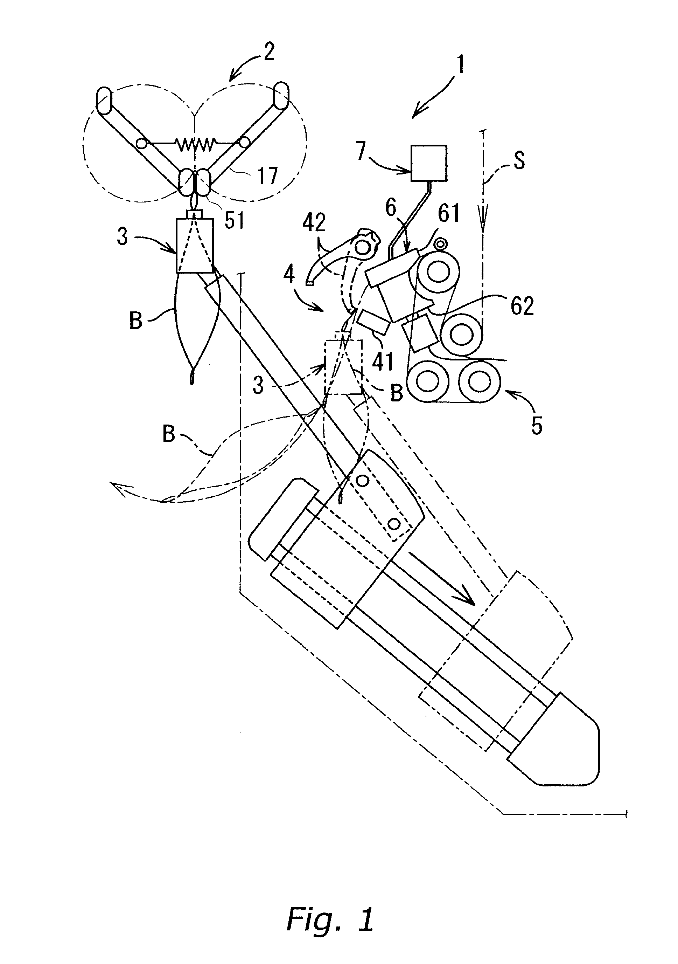

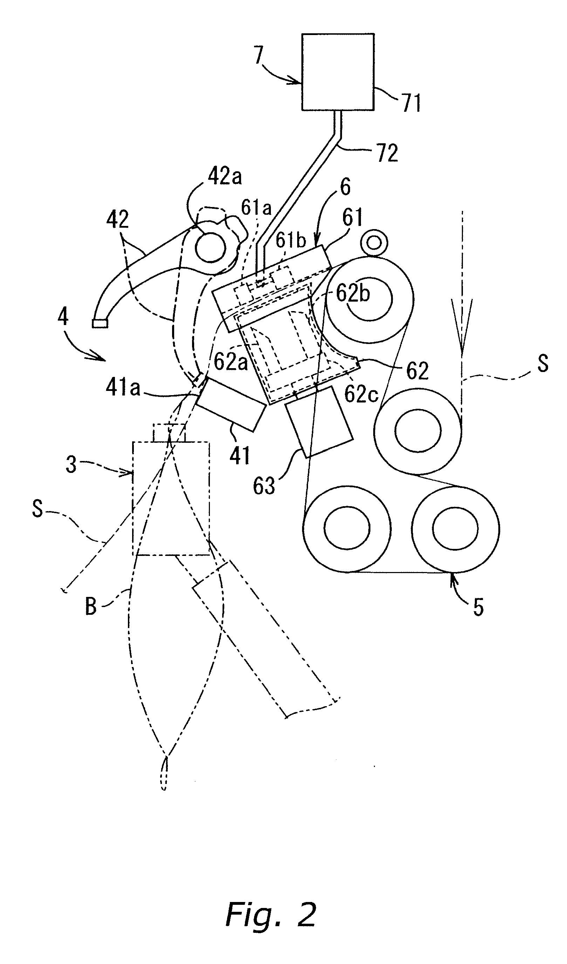

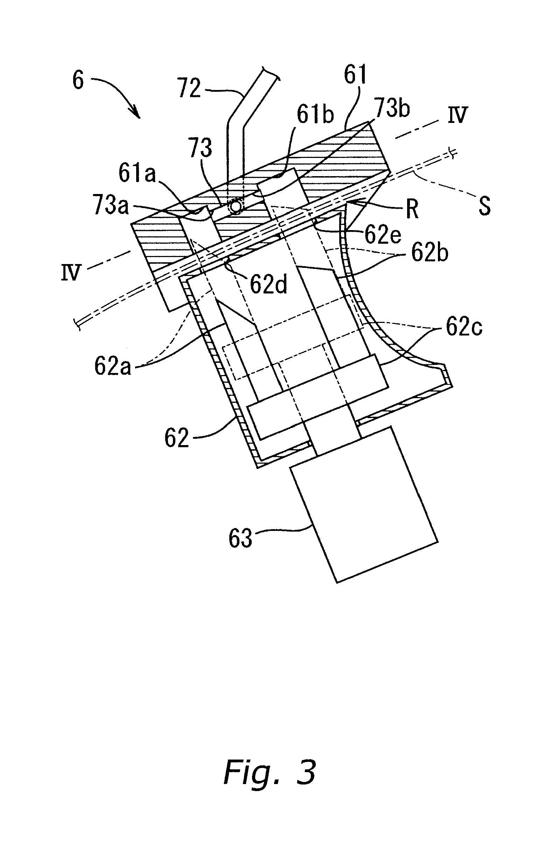

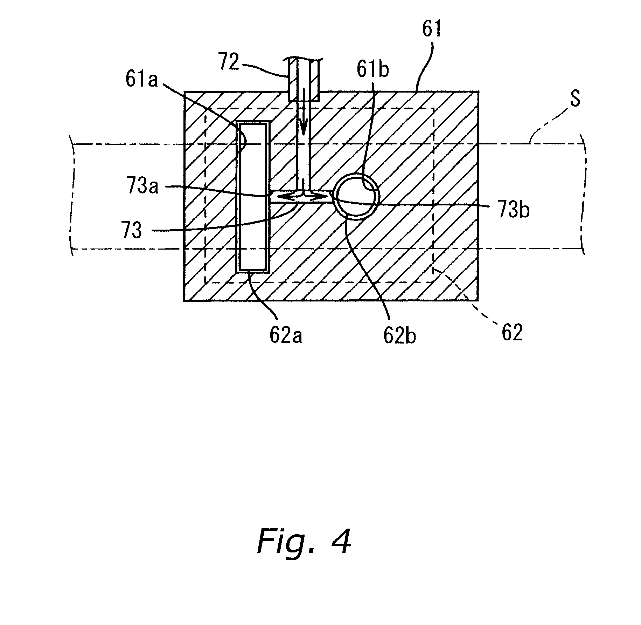

Figure 1 is a view to conceptually show a suspended product manufacturing apparatus 1 that manufactures a suspended product G shown in Figure 18. The suspended product manufacturing apparatus 1 attaches a plurality of bags B to a sheet material S having an adhesive layer S2, cuts the sheet material S to a predetermined length, and punches a suspension hole H on an upper end Su side. Figure 2 is an enlarged view around a guide unit 6 that cuts and punches the sheet material S while guiding the sheet material S being conveyed in the suspended product manufacturing apparatus 1. Figure 3 is an enlarged cross-sectional view of the guide unit 6. Figure 4 is a view to conceptually show a cross section taken along line IV-IV in Figure 3.

### <OVERVIEW OF THE SUSPENDED PRODUCT MANUFACTURING APPARATUS>

As shown in Figure 1, the suspended product manufacturing apparatus 1 includes a packaging unit 2, a moving unit 3, a fixing unit 4, a sheet material conveying unit 5, the guide unit 6, and a sprayer 7.

The packaging unit 2 puts articles into a bag by an automatic packaging, and produces the bag B that is a packaged item. Note that Figure 1 shows only a sealing mechanism 17 of the packaging unit 2, which seals the bag B after the articles are fed into the bag B.

The moving unit 3 grasps the bag B produced by the packaging unit 2, and moves the bag B to the fixing unit 4 as shown by the two-dot chain line in Figure 1.

The sheet material conveying unit 5 sequentially feeds out the belt-like sheet material S. The fed-out sheet material S is guided to the fixing unit 4 by the guide unit 6. The fixing unit 4 grasps the sheet material S and the upper end of the bag B together, and applies pressure to adhesively attach them together.

The sprayer 7 is connected to the guide unit 6. The sprayer 7 sprays water to blades provided to the guide unit 6. Specifically, the blades refer to a cutting blade 62a extending in the width direction of the sheet material S, and a hole punch blade 62b having a circular cross section that punches the sheet material S (Figures 2 to 4). The water is sprayed mainly to blade edges of the blades. The portion other than the blade edges of the blades is coated with fluororesin as an anti-corrosion treatment.

Below, the fixing unit 4, the guide unit 6, the sprayer 7, and the sheet material S are described.

### <FIXING UNIT>

As shown in Figure 2, the fixing unit 4 includes a heater 41 and a clamp 42. The heater 41 is a block body whose pressure surface 41a is heated at high temperatures. The clamp 42 is a lever mechanism supported by a rotation support shaft 42a, and reciprocates between a release position (solid line) and a locking position (two-dot chain line). At the locking position, the clamp 42 grasps the sheet material S and the bag B between the clamp 42 itself and the heater 41 and applies pressure to thermally weld (adhesively attach) them together.

Then, the fixing unit 4 repeats the process of adhesively attaching the individual bag B to the sheet material S so as to adhesively attach a plurality of bags B to the belt-like sheet material S in the longitudinal direction thereof.

### <GUIDE UNIT>

The guide unit 6 is arranged on the upstream side of the fixing unit 4, and guides the sheet material S fed out from the sheet material conveying unit 5 to the fixing unit 4. Further, the guide unit 6 cuts the upper end Su of the sheet material S and punches the suspension hole H each time a predetermined number of bags B are adhesively attached to the sheet material S.

Specifically, as shown in Figures 2 and 3, the guide unit 6 includes an upper block 61, a lower block 62, the cutting blade 62a, a hole punch blade 62b, a connecting block 62c, and an air cylinder 63. Additionally, provided between the upper block 61 and the lower block 62 is a passage R that guides the sheet material S (Figure 3).

The lower block 62 is a hollow case and houses the cutting blade 62a and the hole punch blade 62b by covering them from the surroundings. The lower block 62 is provided with through-holes 62d and 62e.

The cutting blade 62a can protrude from the lower block 62 to the passage R through the through-hole 62d. As the cutting blade 62a protrudes into the passage R, the cutting blade 62a cuts the upper end Su side of the sheet material S.

The hole punch blade 62b can protrude from the lower block 62 to the passage R through the through-hole 62e. As the hole punch blade 62b protrudes into the passage R, the hole punch blade 62b forms the suspension hole H in the sheet material S.

The connecting portion 62c interconnects the cutting blade 62a and the hole punch blade 62b.

The air cylinder 63 is a driving device, and moves in the down to up direction as shown by the one-dot chain lines in Figure 3. Because the cutting blade 62a and the hole punch blade 62b are interconnected, cutting of the sheet material S and forming of the suspension hole H are concurrently performed. Note that the timing in which the sheet material S is cut and the timing in which the suspension hole H is formed may be the same or slightly different.

The upper block 61 is provided with depression-like receiving portions 61a and 61b. Housed in the depression-like receiving portion 61a is the blade edge of the cutting blade 62a protruding from the through-hole 62d across the passage R. Housed in the depression-like receiving portion 61b is the blade edge of the hole punch blade 62b protruding from the through-hole 62e across the passage R.

The guide unit 6 concurrently cuts the sheet material S and punches the suspension hole H by the air cylinder 63, so that it is possible to efficiently produce the suspended product G.

### <SPRAYER>

The sprayer 7 is a liquid supply device that sprays liquid to the blades (the cutting blade 62a and the hole punch blade 62b) provided to the guide unit 6, and includes a tank 71 for storing the liquid, a pipe 72, and a nozzle 73 (Figures 2 to 4). Water is used as the liquid.

The pipe 72 connects the tank 71 to the upper block 61 of the guide unit 6, and supplies the water in the tank 71 to the guide unit 6 (Figure 2). Specifically, the pipe 72 is connected to the nozzle 73 arranged in the guide unit 6 from the side of the nozzle 73 with respect to the direction in which the sheet material S is conveyed. The pipe 72 guides the water stored in the tank 71 to the nozzle 73.

The nozzle 73 is a spray nozzle provided with a solenoid valve (not shown), and includes spray openings 73a and 73b for spraying the water. The spray openings 73a and 73b are opened toward the inner wall surfaces of the receiving portions 61a and 61b, respectively (Figure 4), which are provided above the passage R of the sheet material S (Figure 3).

Note that the pipe 72 is connected to the nozzle 73 at a position between the spray opening 73a and the spray opening 73b (Figure 4). Thus, the water that flowed from the tank 71 to the nozzle 73 through the pipe 72 is divided into two streams, one flowing to the spray opening 73a and the other flowing to the spray opening 73b.

The spray openings 73a and 73b of the nozzle 73 concurrently eject a small amount of fine misty water. The water ejected attaches to each blade edge of the cutting blade 62a and the hole punch blade 62b. Note that the ejection of water is controlled by a control system (not shown).

The sprayer 7 sprays water once after each time the cutting blade 62a performs cutting and the hole punch blade 62b performs punching a predetermined number of times.

As described above, the spray openings 73a and 73b are opened toward the inner wall surfaces of the receiving portions 61a and 61b, respectively. Therefore, when the blade edges of both the cutting blade 62a and the hole punch blade 62b are located inside the lower block 62, the water cannot be directly sprayed to the cutting blade 62a and the hole punch blade 62b. This is because the space between the spray opening 73a and the cutting blade 62a and the space between the spray opening 73b and the hole punch blade 62b are blocked by the sheet material S.

Accordingly, the sprayer 7 sprays water at the timing in which the blade edges of both the cutting blade 62a and the hole punch blade 62b are respectively housed in the receiving portions 61a and 61b after the cutting blade 62a cuts the sheet material S and the hole punch blade 62b punches the sheet material S as shown by the one-dot chain lines in Figure 3.

### <SHEET MATERIAL S>

As shown in Figure 19(a), the sheet material S to which the bag B is adhesively attached has a three-layer structure including a base material layer S1, an adhesive layer S2, and a covered layer S3. Specifically, the adhesive layer S2 is laminated on one side of the base material layer S1. The covered layer S3 is laminated on the adhesive layer S2 on the side opposite to the base material layer S1. The bag B is adhesively attached to the exposed surface of the covered layer S3.

The sheet material S is arranged in the passage R in the following manner: the sheet material S is set such that the adhesive layer S2 and the covered layer S3 are located above the base material layer S 1.

The adhesive that forms the adhesive layer S2 is hydrophobic. Therefore, even when the water sprayed wetted the sheet material S and penetrated into the covered layer S3, deterioration of the adhesive strength of the adhesive layer S2 due to the effect of water hardly occurs.

### 1-2. CHARACTERISTICS OF THE PRESENT EMBODIMENT

The suspended product manufacturing apparatus 1 according to the present embodiment has the following characteristics.

First, the suspended product manufacturing apparatus 1 is characterized as having the liquid supply device that supplies the liquid (water) to the blades (the cutting blade 62a and the hole punch blade 62b) for cutting and punching the sheet material S.

According to the above described characteristics, the liquid supply device supplies the liquid to the blades, providing the liquid between the sheet material S and the blades when cutting and punching the sheet material S. Accordingly, the blades are prevented from coming into direct contact with the sheet material S. Thus, a fragment of the sheet material S generated at the time of cutting and punching can be prevented from attaching to the blades, and thus the keen sharpness of the blades can be maintained.

Note that the liquid is supplied mainly to the blade edges of the blades. The portion other than the blade edges of the blades is coated with fluororesin. Thus, the attachment of a fragment of the sheet material S to the blades can be prevented with respect to the entire blades.

Second, the suspended product manufacturing apparatus 1 is characterized by that the liquid supply device is the sprayer 7. According to the above described characteristics, it is possible to supply the liquid to the blade without the sprayer 7 coming into direct contact with the blades. Thus, it is possible to prevent wear and damage of the blades and the sprayer 7.

Third, the suspended product manufacturing apparatus 1 is characterized as being applicable to the sheet material S having adhesive. According to the above described characteristics, the attachment of the adhesive to the blades can be prevented.

Further, the suspended product manufacturing apparatus 1 is characterized by that the adhesive is applied to the hydrophobic sheet material S. According to the above described characteristics, even when the adhesive is wet by the water supplied, the water is prevented from penetrating into the adhesive. Thus, it is possible to prevent deterioration of the adhesive strength of the adhesive. Further, because the water attached to the blades is repelled by the hydrophobic adhesive, the water can easily be provided between the blades and the adhesive. Thus, it becomes easier to prevent attachment of the adhesive to the blades.

Fourth, the suspended product manufacturing apparatus 1 is characterized by that the liquid is supplied to the blades once after each time cutting and punching are performed a predetermined number of times.

According to the above described characteristics, it is possible to prevent a large amount of liquid from attaching to the front surface side of the adhesive and to prevent the liquid from penetrating into the adhesive.

Fifth, the suspended product manufacturing apparatus 1 is characterized by that the liquid is supplied concurrently to both the cutting blade 62a and the hole punch blade 62b.

According to the above described characteristics, because it is possible to apply the liquid to both the cutting blade 62a and the hole punch blade 62b at one time, the same mechanism and control system for supplying the liquid can be shared for both blades, and thus the cost can be reduced.

### 1-3. ALTERNATIVE EMBODIMENT

### <FIRST ALTERNATIVE EMBODIMENT>

In the above described embodiment, the upper block 61 is provided with the spray openings 73a and 73b, and water is sprayed to the sheet material S in the area thereabove. In the above described embodiment, the water sprayed may drip and penetrate into the sheet material S.

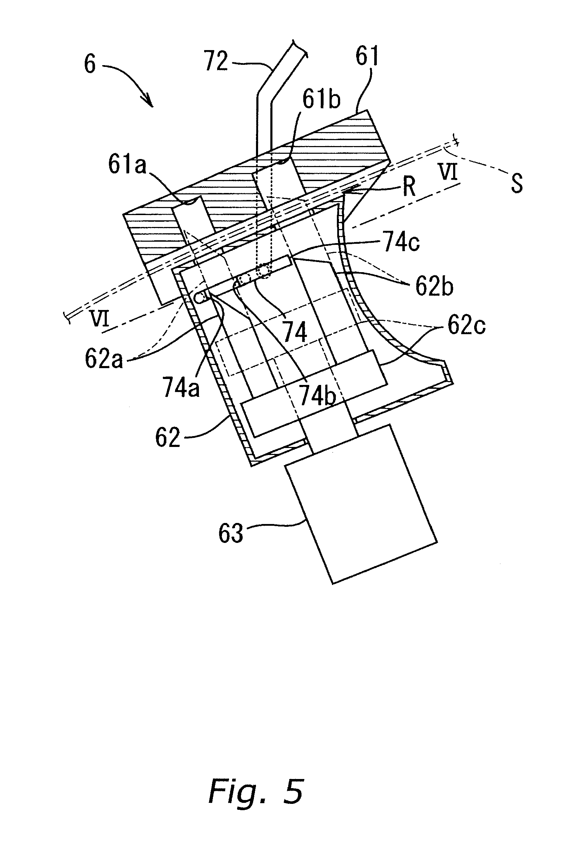

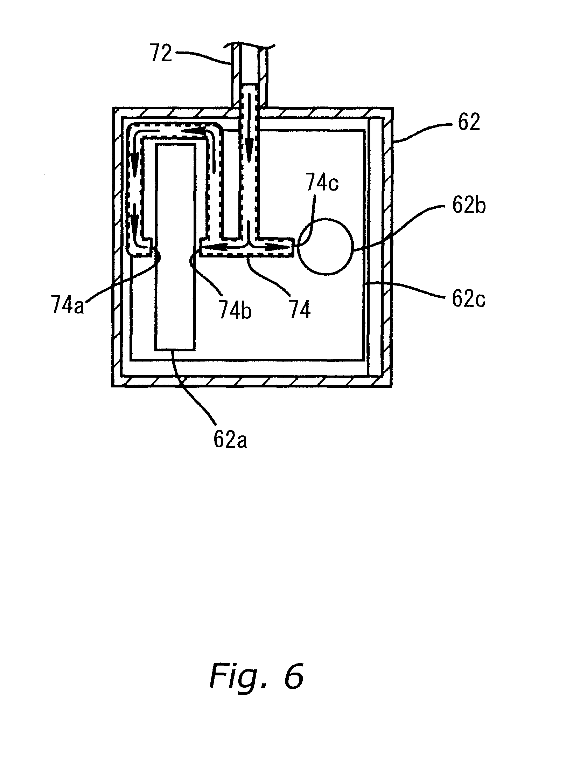

Therefore, the spray openings are provided inside the lower block 62 and the water is sprayed to the sheet material S in the area therebelow. A specific description is given with reference to Figures 5 and 6.

Figure 5 is a view to conceptually show the guide unit 6 according to the present alternative embodiment. Figure 6 is a view to show a cross section taken along line VI-VI in Figure 5. The sprayer 7 includes the tank 71 that stores water, the pipe 72, and a nozzle 74. The pipe 72 is connected to the nozzle 74 and guides the water stored in the tank to the nozzle 74.

The nozzle 74 is a pipe-shaped spray nozzle provided with a solenoid valve (not shown). The nozzle 74 is arranged inside the lower block 62 and includes spray openings 74a, 74b, and 74c for spraying water.

The spray openings 74a and 74b are oppositely located on both sides of the breaking blade 62a in the state of being housed in the lower block 62 with respect to the moving direction of the cutting blade 62a. Additionally, the directions in which the spray openings 74a and 74b spray the water are both oriented to the breaking blade 62a. Accordingly, misty water can be supplied to the cutting blade 62a.

The spray opening 74c is located in the vicinity of the blade edge of the hole punch blade 62b in the state of the cutting blade 62a being housed in the lower block 62. Additionally, the direction in which water is sprayed by the spray opening 74c is oriented to the hole punch blade 62b. Accordingly, misty water can be supplied to the hole punch blade 62b.

The sprayer 7 sprays water once after each time the cutting blade 62a performs cutting and the hole punch blade 62b performs punching a predetermined number of times.

The spray openings 74a, 74b, and 74c are located inside the lower block 62 as described above. Therefore, when the blade edges of the cutting blade 62a and the hole punch blade 62b are located inside the upper block 61, water cannot be directly sprayed to the blade edges of both the cutting blade 62a and the hole punch blade 62b. This is because the space between the spray openings 74a, 74b, and 74c and the blade edges of both the cutting blade 62a and the hole punch blade 62b is blocked by the sheet material S.

Accordingly, as shown by the solid lines in Figure 5, the sprayer 7 sprays water at the timing in which both the cutting blade 62a and the hole punch blade 62b are housed in the lower block 62.

According to the present alternative embodiment, because the liquid is supplied below the base material layer S 1 with the adhesive (the adhesive layer S2) being above the base material layer S1, it rarely occurs that the adhesive is wet by the liquid supplied. Thus, it is possible to prevent deterioration of the adhesive strength of the adhesive, and the packaged item (the bag B) that was removed from the sheet material S can be adhesively reattached to the sheet material S.

Further, because the blades (the cutting blade 62a and the hole punch blade 62b) are covered by the lower block 62, the humidity in the lower block 62 increases due to the liquid sprayed to the blades. Thus, the blades do not easily get dry, and thus it is easy to prevent attachment of the adhesive to the blades. Further, even if the water supplied drips, the water will be stored inside the lower block 62, so that it is possible to prevent the packaged item (the bag B) and the apparatus from being wet.

### <SECOND ALTERNATIVE EMBODIMENT>

In the above described embodiment and the first alternative embodiment, the sprayer 7 that sprays water from the nozzles 73 and 74 to the blade edges of the blades (the cutting blade 62a and the hole punch blade 62b) is employed as the liquid supply device to supply water to the blades. However, it is difficult to control the timing to spray water and the structure of the sprayer is complicated.

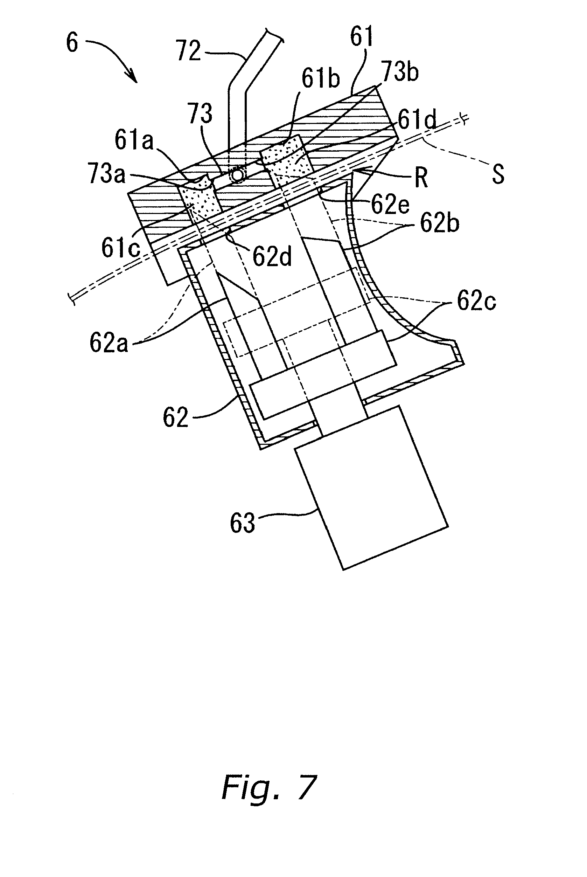

Thus, the guide unit 6 is provided with a liquid absorbing member in which water is absorbed on the moving path of the blades (the cutting blade 62a and the hole punch blade 62b) that repeatedly reciprocate back and forth for cutting and punching. A sponge, felt, and the like can be used as the liquid absorbing member. Note that the liquid absorbing member can be regarded as the liquid supply device. A specific description is given with reference to Figure 7.

Figure 7 is a view to conceptually show the guide unit 6 according to the present alternative embodiment. Sponges 61c and 61d are arranged respectively in the receiving portions 61 a and 61b of the upper block 61. Water is supplied from the nozzle 73 to the sponges 61 c and 61d.

According to the present alternative embodiment, the blades (the cutting blade 62a and the hole punch blade 62b) are caused to come into contact with the sponges 61c and 61d as the liquid absorbing members and thereby the liquid is supplied to the blades. Therefore, it is possible to entirely apply the liquid to any desired portion of the blades simply by designing the liquid absorbing members in appropriate shape, size, and the like. Thus, excessive liquid supply to the blades is prevented and it is possible to prevent formation of corrosion on the blade edges of the blades.

Further, it is possible to supply the liquid to the blades simply by moving the blades by arranging the liquid absorbing members on the path along which the blades move. Therefore, there is no need to provide a separate driving mechanism for causing the liquid absorbing members to come into contact with the blades.

Note that the liquid absorbing members may be arranged inside the lower block 62 so as to be brought into contact with the blades inside the lower block 62.

### <THIRD ALTERNATIVE EMBODIMENT>

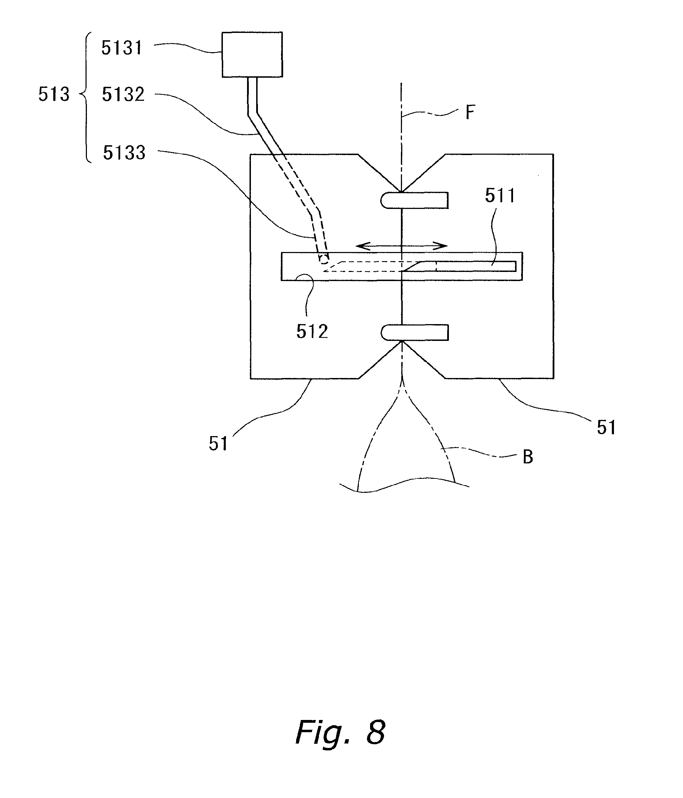

The above described sprayer 7 can be applied to the sealing mechanism 17. A specific description is given with reference to Figures 1 and 8. Note that in the present alternative embodiment, the sprayer is denoted by reference symbol 513. In addition, Figure 8 is an enlarged view of sealing units 51 of the sealing mechanism 17.

The sealing mechanism 17 has a pair of sealing units 51 and sandwiches film F for the bag B between the pair of the sealing units 51 (Figure 1). One sealing unit 51 has a cutter 511 embedded therein. The other sealing unit 51 has a depression-like receiving portion 512 provided therein.

The cutter 511 can protrude from one sealing unit 51 to the other sealing unit 51. The protruding cutter 511 is housed in a receiving portion 512 of the other sealing unit 51. Accordingly, the film F sandwiched between the pair of the sealing units 51 can be cut.

The other sealing unit 51 is provided with a sprayer 513. The sprayer 513 is a liquid supply device that sprays liquid to the cutter 511, and includes a tank 5131 for storing the liquid, a pipe 5132, and a nozzle 5133. Water is used as the liquid. The pipe 5132 guides water stored in the tank 5131 to the nozzle 5133.

A nozzle 5133 is a spray nozzle provided with a solenoid valve (not shown), and includes a spray opening 5133a for spraying water. The spray opening 5133a is opened toward the inner wall surface of the receiving portion 512. A small amount of fine misty water is ejected from the spray opening 5133a of the nozzle 5133. The water ejected attaches to the blade edge of the cutter 511. Note that the ejection of water is controlled by a control system (not shown).

The sprayer 513 sprays water once after each time the cutter 511 performs cutting a predetermined number of times.

Also in this alternative embodiment, as in the above described first alternative embodiment, the sprayer 513 may be provided to the sealing unit 51 having the cutter 511 embedded therein (see Figures 5 and 6).

In addition, as in the above described second alternative embodiment, a liquid absorbing member in which water is absorbed may be provided on the moving path of the cutter 511 (see Figure 7).

According to the present alternative embodiment, a fragment of the film that is generated at the time of cutting can be prevented from attaching to the cutter 511.

### <FOURTH ALTERNATIVE EMBODIMENT>

In the above described embodiment and its alternative embodiment, the water is applied to the blades (the cutting blade 62a and the hole punch blade 62b) by the sprayer 7; however, the liquid may be applied to the surface of the sheet material S.

According to the present alternative embodiment, the liquid is provided between the sheet material S and the blades when cutting and punching of the sheet material S are performed. Accordingly, the blades are prevented from coming into direct contact with the sheet material S. Thus, a fragment of the sheet material S generated at the time of cutting and punching can be prevented from attaching to the blades, and thus the keen sharpness of the blade can be maintained.

Further, because there is no need to provide the sprayer 7 that supplies the liquid to the blades, it is possible to reduce the size of the suspended product manufacturing apparatus.

In terms of preventing the liquid from penetrating into the sheet material S, it is preferable to use volatile liquid.

### <OTHER ALTERNATIVE EMBODIMENT>

The sheet material S in the above described embodiment is configured such that the adhesive layer S2 and the covered layer S3 are laminated in that order on one side of the base material layer S1 (Figure 19(a)); however, the covered layer S3 to which the bag B is thermally welded does not need to be present. In other words, the bag B may be directly fixed to the adhesive layer S2 by the fixing unit 4.

The sheet material S in the above described embodiment is configured such that the adhesive layer S2 is in a layered form and covers the entire one side of the base material layer S1 (Figure 19(a)); however, the adhesive layer S2 may partially cover one side of the base material layer S 1.

In the sprayer 7 in the above described embodiment, water is used as the liquid. However, a liquid other than water or a solution in which an additive is added to water may be used as long as it can prevent the adhesive used for the adhesive layer S2 from sticking to the blades. Additionally, a type of adhesive used for the adhesive layer S2 can be selected according to a type of liquid. In other words, as long as it is a type of adhesive capable of preventing penetration of the liquid that is used, it may not be a so-called hydrophobic adhesive capable of preventing water penetration.

In the above described embodiment, the sheet material S is cut by the cutting blade 62a; however, the sheet material S may be perforated. Then, the sheet material may be cut off at the perforation in a later process. Accordingly, it is possible to produce the suspended product G with the sheet material S uncut, and thus the production process is simplified.

### 2. SECOND EMBODIMENT

Below, a suspended product manufacturing apparatus that is a product manufacturing apparatus according to an embodiment of the present invention is described with reference to the drawings.

### 2-1. STRUCTURE OF THE SUSPENDED PRODUCT MANUFACTURING APPARATUS

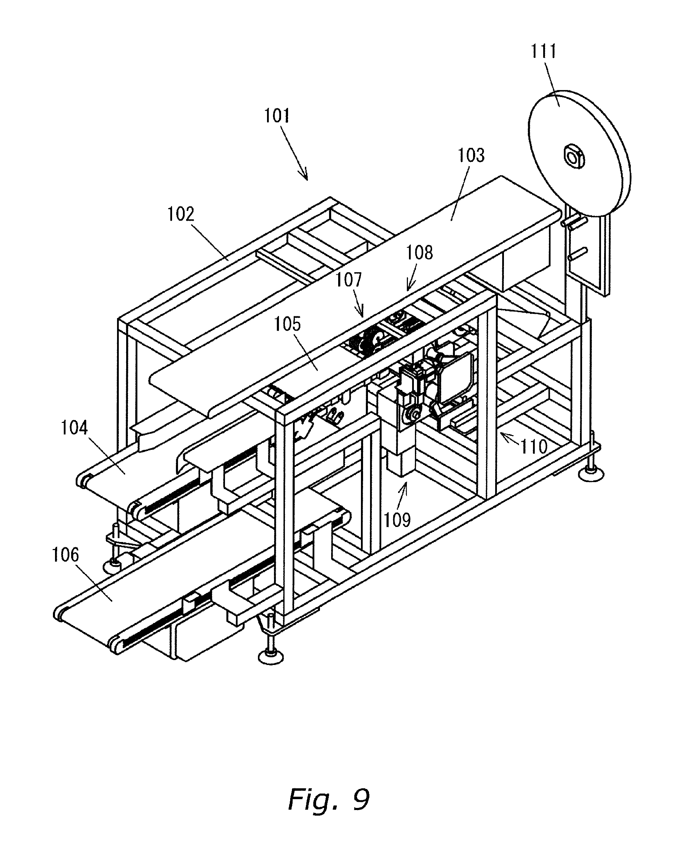

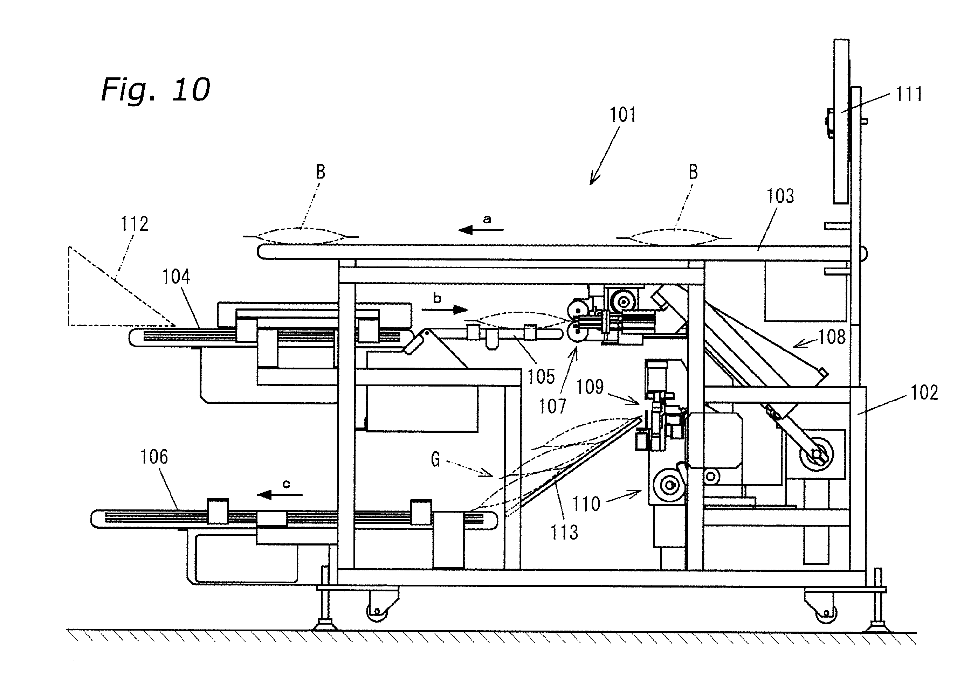

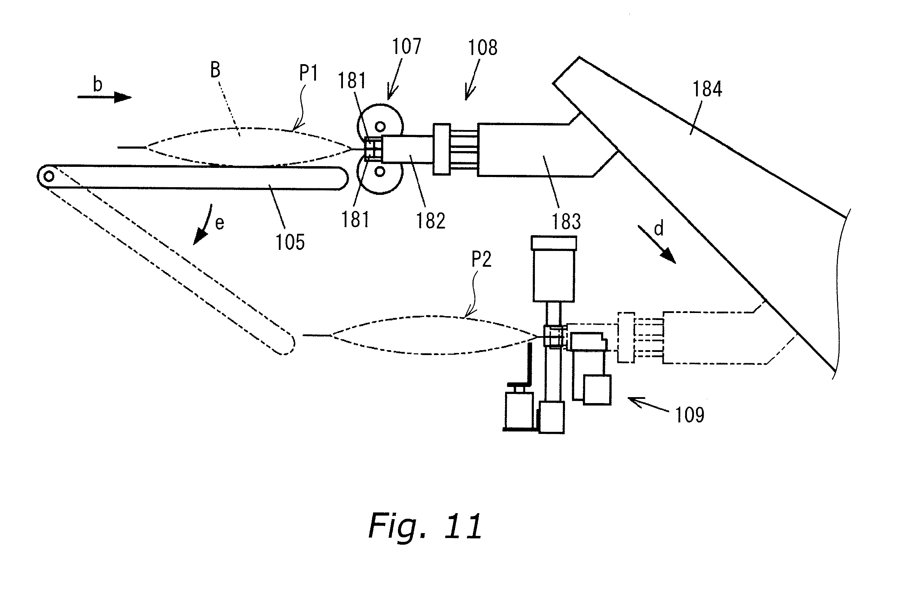

Figures 9 and 10 are a perspective view and a side view, respectively, to conceptually show a suspended product manufacturing apparatus 101 according to the present embodiment. Figure 11 is a view to show a series of flow from the process of guiding a packaged item (the bag B) into the suspended product manufacturing apparatus 101 to the process of attaching the packaged item to the sheet material S so as to manufacture the suspended product G.

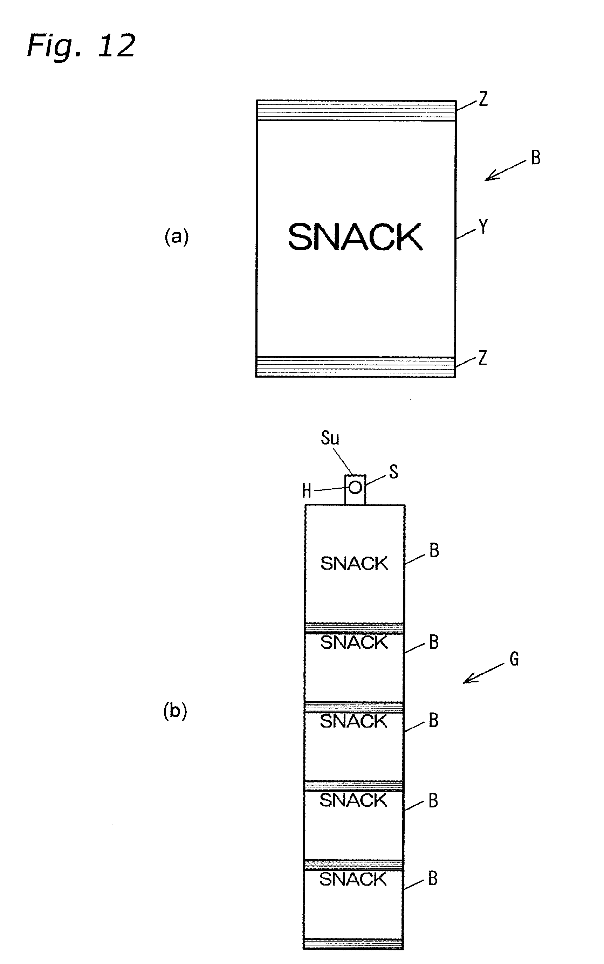

Figures 12(a) and 12(b) show the packaged item (bag B) and the suspended product G, respectively. The bag B has a hollow portion Y to be filled with snacks and the like, and also has two seal portions Z, one at the top and one at the bottom (Figure 12(a)). Note that the top seal portion Z is the seal portion Z on which the letters "SNACK" written on the bag can be read from a normal viewpoint when one of the two seal portions Z is picked and lifted up.

In the suspended product G, a predetermined number of bags B are aligned and attached to the sheet material S (Figure 12(b)). The top seal portion Z of each bag B is attached to the sheet material S. The suspension hole H is formed in a portion near an end of the sheet material in order to allow the suspended product G to be displayed suspended. <OVERVIEW OF THE SUSPENDED PRODUCT MANUFACTURING

### APPARATUS>

The suspended product manufacturing apparatus 101 is an apparatus that manufactures the suspended product G. The suspended product manufacturing apparatus 101 is independent from both upstream devices and downstream devices, and has general versatility. Note that the upstream devices include a packaging unit that fills the bag B with articles through automatic packaging and the like. The downstream devices include a device that puts the suspended product G into a box and the like.

Specifically, the suspended product manufacturing apparatus 101 includes a main body unit 102, a supply conveyor 103, a lead-in conveyor 104, a drop conveyor 105, a discharge conveyor 106, a brush unit 107, a grasp unit 108, a suspended product manufacturing unit 109, and a sheet material conveying unit 110.

The supply conveyor 103, the lead-in conveyor 104, the drop conveyor 105, the discharge conveyor 106, the brush unit 107, the grasp unit 108, the suspended product manufacturing unit 109, and the sheet material conveying unit 110 are supported by the main body unit 102.

Each device will be described in detail below.

### <SUPPLY CONVEYOR>

The supply conveyor 103 supplies the bag B produced by the upstream devices to the suspended product manufacturing apparatus 101. Specifically, the supply conveyor 103 is arranged outside the suspended product manufacturing apparatus 101, and conveys the bag B in a generally horizontal direction and in the direction of arrow "a" (Figure 10).

### <LEAD-IN CONVEYOR>

The lead-in conveyor 104 guides the bag B supplied from the supply conveyor 103 into the suspended product manufacturing apparatus 101. Specifically, the lead-in conveyor 104 conveys the bag B in a generally horizontal direction and in the direction of arrow "b" (Figure 10). At this time, the bag B is conveyed in the direction of arrow "b" with the top seal portion Z facing forward. The direction of arrow "b" is the direction opposite to the direction of arrow "a".

A fall preventing member 112 is arranged on the starting end side of the lead-in conveyor 104 that conveys the bag B in the direction of arrow "b". The fall preventing member 112 prevents the bag B being dropped from the supply conveyor 103 from falling from the suspended product manufacturing apparatus 101. Note that the illustration of the fall preventing member 112 is omitted in Figure 9.

### <DROP CONVEYOR>

The drop conveyor 105 is positioned on the terminal end side of the lead-in conveyor 104, and guides the bag B conveyed from the lead-in conveyor 104 to the brush unit 107.

As shown in Figure 11, the drop conveyor 105 can move in the direction of arrow "e" with a fulcrum 151 as the center thereof. The drop conveyor 105 is inclined with the movement thereof in the direction of arrow "e".

The movement of the drop conveyor 105 is linked to the movement of the grasp unit 108. The details are provided in the later section "Movement of the Grasp Unit" of "GRASP UNIT".

### <BRUSH UNIT>

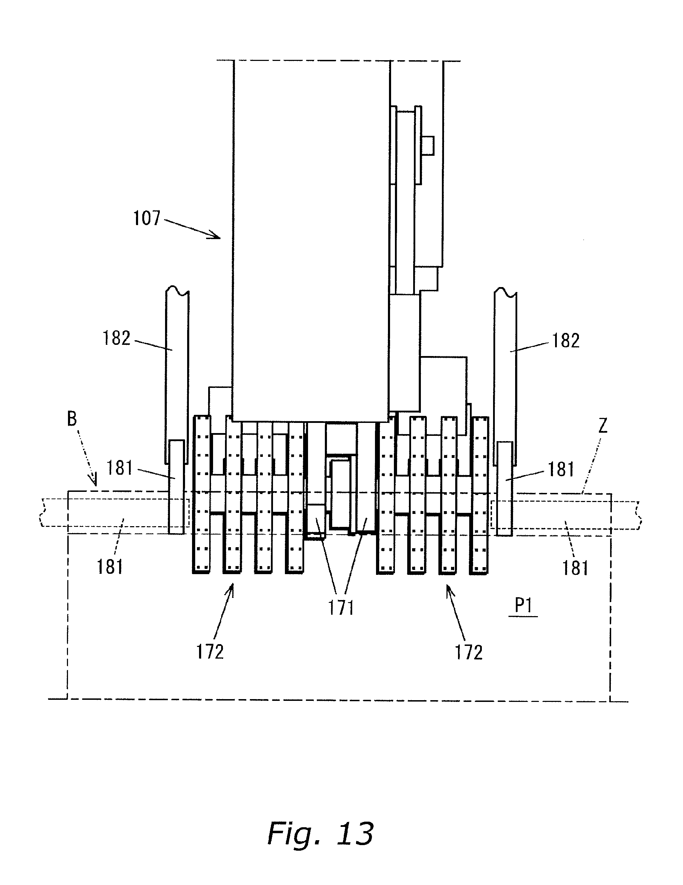

The brush unit 107 smoothes out wrinkles on the top seal portion Z of the bag B being conveyed from the drop conveyor 105. Details will be described using Figure 13.

Figure 13 is a view of the brush unit 107 viewed from above. The brush unit 107 is arranged on the head side of the arrow "b" so as to face the drop conveyor 105 (Figure 11), and includes brushes 172 and supporting members 171.

The brushes 172 smooth out the wrinkles of the seal portion Z of the bag B. Specifically, the brush unit 107 includes the two brushes 172 for sandwiching the seal portion Z from the upper side and the lower side. Both the upper and lower brushes 172 have a plurality of thin disk-shaped, separated brushes arranged side by side at predetermined intervals. Spongious brushes, brushes like scrubbing brushes with wire rods tied together radially, and the like, can be adopted for the brushes 172.

The upper brush 172 rotates, in the state of being in contact with the upper surface of the seal portion Z, from the base side of the seal portion Z to the edge side thereof. The lower brush 172 rotates, in the state of being in contact with the under surface of the seal portion Z, from the base side of the seal portion Z to the edge side thereof. Thereby, the top seal portion Z is stroked by the two brushese, upper and lower brushes 172, and the wrinkles is smoothed out.

The supporting members 171 support the brushes 172. Specifically, the brush unit 107 has two supporting members 171 that respectively support the upper and lower brushes 172.

Note that Figure 13 shows only the upper brush 172 and one supporting member 171 that supports the upper brush 172.

### <GRASP UNIT>

### (Structure of the Grasp Unit)

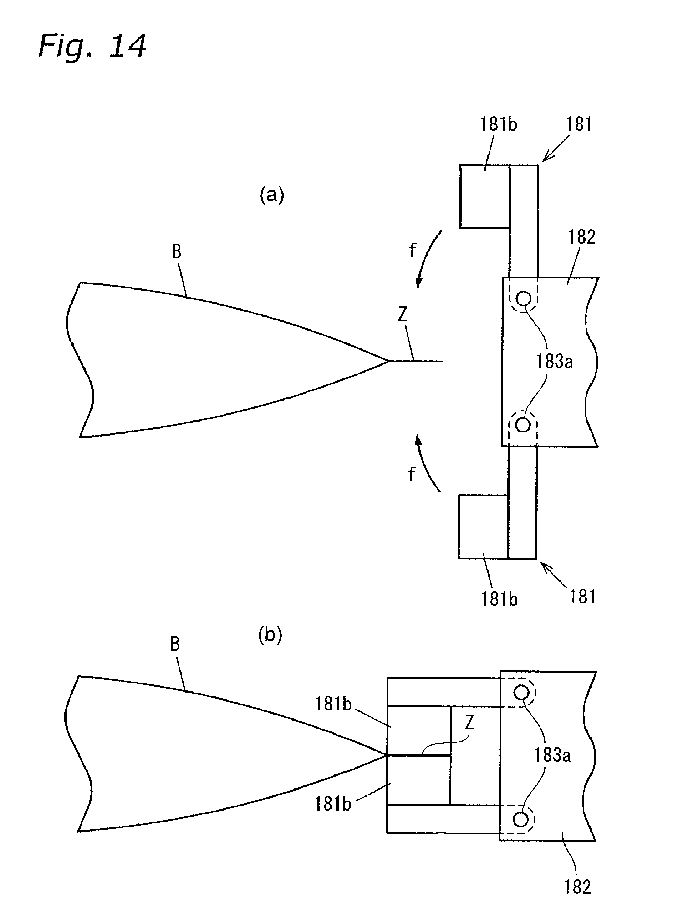

The grasp unit 108 grasps the top seal portion Z of the bag B whose wrinkles are smoothed out by the brush unit 107 from the top seal portion Z side (head side of the arrow b) of the bag B. A specific description is given with reference to Figure 14(a), (b).

Figure 14(a) is a view of the grasp unit 108 seen from the side before the seal portion Z is grasped; and Figure 14(b) is a view of the grasp unit 108 seen from the side with the seal portion Z being grasped. The grasp unit 108 is arranged on the head side of the arrow "b" so as to face the drop conveyor 105 (Figure 11), and includes a pair of grip fingers 181, hands 182, arms 183, and guide rails 184.

The pair of grip fingers 181 is arranged such that one is on the upper side and the other is on the lower side, and each grip finger 181 can move in the direction of arrow "f" with a fulcrum 183a provided to hand 182 as the center (Figure 14(a)). The pair of grip fingers 181 grasps the seal portion Z by sandwiching the seal portion Z from above and below.

The grip fingers 181 have grasp unit members 181 b made of, for example, rubber and the like attached on portions that grasp the seal portion Z (Figure 14). Consequently, it becomes easier to grasp the seal portion Z.

Each hand 182 is supported by the arm 183, and provided with both of the pair of grip fingers 181. The hands 182 can adjust the positions thereof relative to the arms 183. The arms 183 can move along the inclined guide rails 184.

### (Positional Relationship with the Brush Unit)

The grip fingers 181 are provided one on each side of the brush unit 107. The hands 182 are also provided one on each side so as to correspond to the grip fingers 181 (Figure 13).

The grip fingers 181 provided one on each side of the brush unit 107 grasp the seal portion Z in a longitudinal direction on both sides of the brushes 172. Consequently, wrinkles of the seal portion Z between the two grip fingers 181 are smoothed out by the brush unit 107.

### (Movement of the Grasp Unit)

The grasp unit 108 grasps the seal portion Z after the wrinkles of the seal portion Z has been smoothed out by the brush unit 107 at a position P1 near the terminal end portion of the drop conveyor 105.

Thereafter, the grasp unit 108 moves in the direction of arrow "d" (Figure 11), more specifically, on the head side (front) of the arrow "b" (Figure 11) and in the obliquely downward direction. As a result, the bag B being grasped moves to the suspended product manufacturing unit 109, more specifically, to a position P2.

When the bag B moves in the direction of arrow "d", the drop conveyor 105 moves in the direction of the arrow "e" (Figure 11) and inclines.

### <SUSPENDED PRODUCT MANUFACTURING UNIT>

### (Overview of the Suspended Product Manufacturing Unit)

The suspended product manufacturing unit 109 attaches the top seal portion Z of the bag B being grasped by the grasp unit 108 to the sheet material S. The suspended product G manufactured by attaching a predetermined number of bags B to the sheet material S is received at an inclined receiving table 113 and guided to the discharge conveyor 106 (Figure 10). Note that the receiving table 113 is omitted in Figure 9.

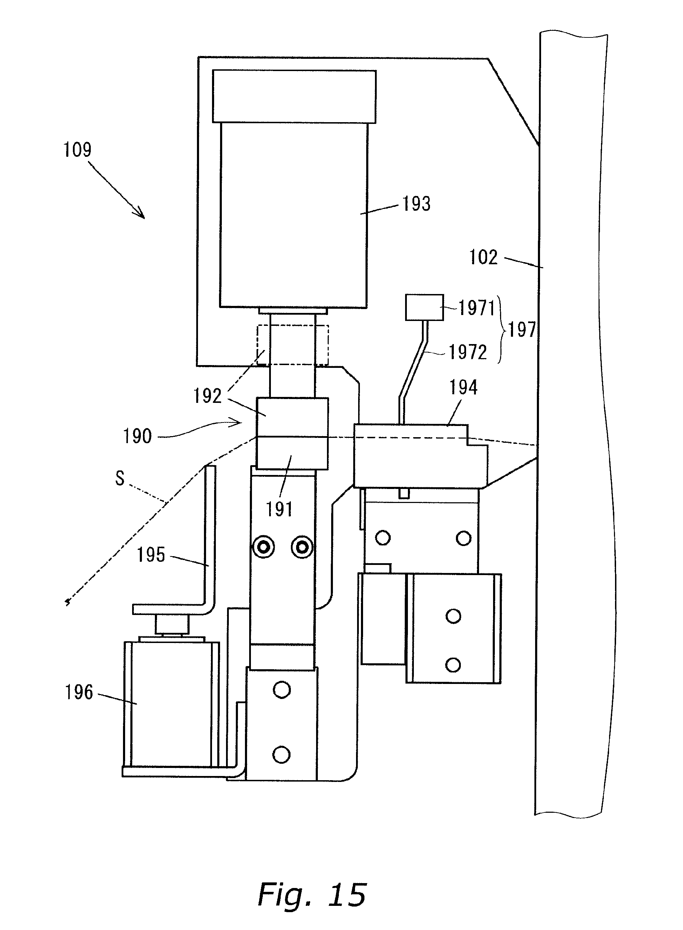

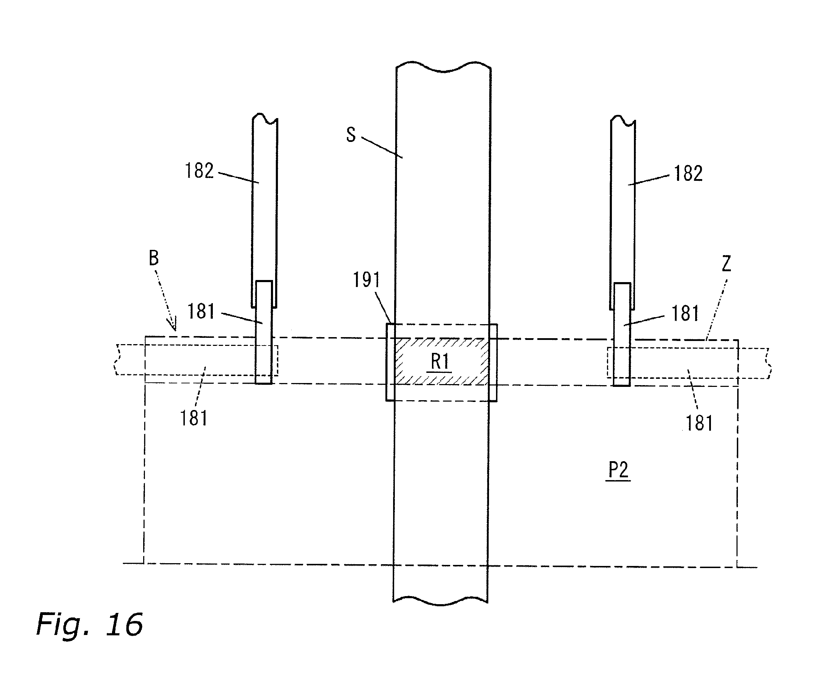

A specific description is given with reference to Figures 15 and 16. Figure 15 is a view of the suspended product manufacturing unit 109 seen from the side, and Figure 16 is a view of the suspended product manufacturing unit 109 seen from the above. The suspended product manufacturing unit 109 includes a fixing unit 190, a guide unit 194, and a sprayer 197.

### (Structure and Movement of the Fixing Unit)

The structure of the fixing unit 190 is described. The fixing unit 190 includes a heater 191, a clamp 192, air cylinders 193 and 196, and a dissolution preventing member 195. The heater 191 is a heat source used to weld the sheet material S and the bag B together.

The clamp 192 can move up and down, sandwich the sheet material S and the bag B between the clamp 192 itself and the heater 191, and press the bag B against the sheet material S. The clamp 192 moves up and down by the air cylinder 193.

The dissolution preventing member 195 moves up and thereby creates a space between the sheet material S and the heater 191 so as to prevent dissolution of the sheet material S. The dissolution preventing member 195 moves up and down by the air cylinder 196.

The movement of the fixing unit 190 is described. First, in a state in which the clamp 192 is moved up, the sheet material S fed out from a roll 111 is placed on the heater 191. The top seal portion Z of the bag B that moved to the position P2 by the grasp unit 108 is overwrapped with the sheet material S on the heater 191.

Then, as a result of downward movement of the clamp 192, the sheet material S and the seal portion Z are sandwiched and the seal portion Z is pressed against the sheet material S. Accordingly, the seal portion Z is welded to the sheet material S by the heat of the heater 191. Note that in Figure 16, an area of the seal portion Z which is welded to the sheet material S is denoted by reference symbol R1.

The fixing unit 190 repeats the process of welding the bag B to the sheet material S, and welds a plurality of the bags B to the belt-like sheet material S in the longitudinal direction thereof.

### (Structure and Movement of the Guide Unit)

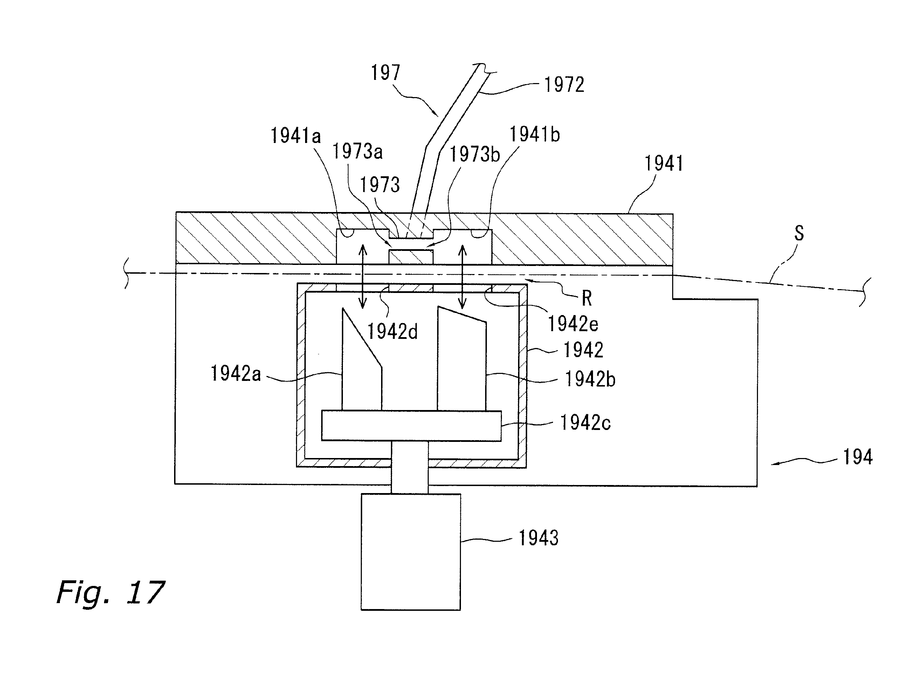

The structure of the guide unit 194 is described. Figure 17 is a view to conceptually show the guide unit 194. The guide unit 194 is arranged on the upstream side of the heater 191 and the clamp 192, and guides the sheet material S fed out from the roll 111 to the heater 191. Further, the guide unit 194 cuts the upper end Su (Figure 12(b)) of the sheet material S and punches the suspension hole H (Figure 12(b)) each time a predetermined number of bags B are adhesively attached to the sheet material S.

Specifically, as shown in Figure 17, the guide unit 194 includes an upper block 1941, a lower block 1942, a cutting blade 1942a, a hole punch blade 1942b, a connecting block 1942c, and an air cylinder 1943. Additionally, provided between the upper block 1941 and the lower block 1942 is the passage R that guides the sheet material S.

The lower block 1942 is a hollow case and houses the cutting blade 1942a and the hole punch blade 1942b by covering them from the surroundings. The lower block 1942 is provided with through-holes 1942d and 1942e.

The cutting blade 1942a can protrude from the lower block 1942 to the passage R through the through-hole 1942d. As the cutting blade 1942a protrudes into the passage R, the cutting blade 1942a cuts the upper end Su of the sheet material S.

The hole punch blade 1942b can protrude from the lower block 1942 to the passage R through through-hole 1942e. As the hole punch blade 1942b protrudes into the passage R, the hole punch blade 1942b forms the suspension hole H in the sheet material S.

The connecting portion 1942c interconnects the cutting blade 1942a and the hole punch blade 1942b.

The air cylinder 1943 is a driving device, and moves in the down to up direction. Because the cutting blade 1942a and the hole punch blade 1942b are interconnected, cutting of the sheet material S and forming of the suspension hole H are concurrently performed. Note that the timing in which the sheet material S is cut and the timing in which the suspension hole H is formed may be the same or slightly different.

The upper block 1941 is provided with depression-like receiving portions 1941a and 1941b. Housed in the depression-like receiving portion 1941a is the blade edge of the cutting blade 1942a protruding from the through-hole 1942d across the passage R. Housed in the depression-like receiving portion 1941b is the blade edge of the hole punch blade 1942b protruding from the through-hole 1942e across the passage R.

The guide unit 194 concurrently cuts the sheet material S and punches the suspension hole H by the air cylinder 1943, so that it is possible to efficiently produce the suspended product G.

### (Structure and Movement of the Sprayer)

Figures 15 and 17 conceptually show the sprayer 197 as well. The sprayer 197 is a liquid supply device that sprays liquid to the blades (the cutting blade 1942a and the hole punch blade 1942b) provided to the guide unit 194, and includes a tank 1971 for storing the liquid, a pipe 1972, and a nozzle 1973 (Figure 15). Water is used as the liquid.

The pipe 1972 connects the tank 1971 to the upper block 1941 of the guide unit 194, and supplies water in the tank 1971 to the guide unit 194. Specifically, the pipe 1972 is connected to the nozzle 1973 arranged in the guide unit 194 from the side of the nozzle 1973 with respect to the direction in which the sheet material S is conveyed. The pipe 1972 guides the water stored in the tank 1971 to the nozzle 1973.

The nozzle 1973 is a spray nozzle provided with a solenoid valve (not shown). The nozzle 1973 is disposed in the guide unit 194 and includes spray openings 1973a and 1973b for spraying water. The spray openings 1973a and 1973b are opened toward the inner wall surfaces of the receiving portions 1941a and 1941b, respectively, which are provided above the passage R of the sheet material S.

Note that the pipe 1972 is connected to the nozzle 1973 at a position between the spray opening 1973a and the spray opening 1973b. Thus, the water that flowed from the tank 1971 to the nozzle 1973 through the pipe 1972 is divided into two streams, one flowing to the spray opening 1973a and the other flowing to the spray opening 1973b.

A small amount of fine misty water is ejected concurrently from the spray openings 1973a and 1973b of the nozzle 1973. The water ejected attaches to each blade edge of the cutting blade 1942a and the hole punch blade 1942b. Note the ejection of water is controlled by a control system (not shown).

The sprayer 197 sprays water once after each time the cutting blade 1942a performs cutting and the hole punch blade 1942b performs punching a predetermined number of times.

As described above, the spray openings 1973a and 1973b are opened toward the inner wall surfaces of the receiving portions 1941 a and 1941b, respectively. Therefore, when the blade edges of both the cutting blade 1942a and the hole punch blade 1942b are located inside the lower block 1942, water cannot be directly sprayed to the cutting blade 1942a and the hole punch blade 1942b. This is because the space between the spray opening 1973a and the cutting blade 1942a and the space between the spray opening 1973b and the hole punch blade 1942b are blocked by the sheet material S.

Accordingly, the sprayer 197 sprays water at the timing in which the blade edges of both the cutting blade 1942a and the hole punch blade 1942b are respectively housed in the receiving portions 1941a and 1941b after the cutting blade 1942a cuts the sheet material S and the hole punch blade 1942b punches the sheet material S as shown by the one-dot chain lines in Figure 3.

As in the first alternative embodiment of the first embodiment, the present embodiment may also be configured such that the spray openings are provided inside the lower block 1942 and water is sprayed to the sheet material S in the area therebelow (see Figures 5 and 6).

In addition, as in the second alternative embodiment of the first embodiment, a liquid absorbing member in which water is absorbed may be provided on the moving path of the blades (the cutting blade 1942a and the hole punch blade 1942b) that repeatedly reciprocate back and forth for cutting and punching in the guide unit 194 (see Figure 7).

### <DISCHARGE CONVEYOR>

The discharge conveyor 106 discharges the suspended product G manufactured by the suspended product manufacturing apparatus 101 to the downstream devices. Specifically, the discharge conveyor 106 conveys the suspended product G in the direction of arrow "c" (Figure 10).

### <SHEET MATERIAL CONVEYING UNIT>

The sheet material conveying unit 110 feeds out the sheet material S from the roll 111 in synchronization with the manufacture of the suspended product G. Note that the roll 111 is arranged in the upper portion of the main body unit 102, and is replaceable.

### 2-2. CHARACTERISTICS OF THE PRESENT EMBODIMENT

The suspended product manufacturing apparatus 101 according to the present embodiment has the same characteristics as those described in the first embodiment. Further, because the suspended product manufacturing apparatus 101 is independent from the upstream devices and the downstream devices, it has high general versatility.

### 2-3. ALTERNATIVE EMBODIMENT

The grasp unit 108 may grasp the seal portion Z by the grip fingers 181 from the lateral sides of the bag B. In this case, the grasp unit 108 can grasp the bag B from the lateral sides thereof in the vicinity of the area where the wrinkles are smoothed out by the brush unit 107. Note that in Figures 13 and 16, the grip fingers 181 according to this embodiment is shown by the broken lines.

This invention has been described in detail; however, the above descriptions are exemplifications in all aspects and are not intended for limiting this invention. It is understood that an infinite number of modifications that are not illustrated are conceivable within the spirit and scope of the invention.

## Claims

1. A product manufacturing apparatus for manufacturing a packaged product, comprising:
a blade configured to perform at least one of cutting and punching of at least one of a sheet material attached to a packaged item and a sheet material as a component of the packaged product; and
a liquid supply device configured to supply liquid to the blade.

2. The product manufacturing apparatus according to claim 1, wherein
the sheet material is a sheet-like member to which the plurality of packaged items are attached and includes adhesive, and
the product manufacturing apparatus is configured to manufacture a suspended product in which the plurality of packaged items are suspended from the sheet material.

3. The product manufacturing apparatus according to claim 2, wherein
the sheet material includes
a base material layer and
the adhesive applied to one side of the base material layer,
the sheet material is conveyed with the one side facing up,
the blade performs at least one of cutting and punching of the sheet material in the direction from below the sheet material to thereabove, and
the liquid supply device applies the liquid to the blade in an area below the sheet material.

4. The product manufacturing apparatus according to claim 3, further comprising a case for covering the blade in the area below the sheet material.

5. The product manufacturing apparatus according to claim 3 or claim 4, wherein the liquid is water and the adhesive is hydrophobic.

6. The product manufacturing apparatus according to any one of claim 2 through claim 5, wherein
the liquid supply device supplies the liquid to the blade once after each time at least
one of the cutting and the punching is performed a predetermined number of times.

7. The product manufacturing apparatus according to any one of claim 2 through claim 6, wherein
two of the blades are provided,
one blade is a cutting blade configured to cut the sheet material,
the other blade is a hole punch blade configured to punch the sheet material, and the liquid supply device is configured to supply the liquid concurrently to both the
cutting blade and the hole punch blade.

8. The product manufacturing apparatus according to any one of claim 1 through claim 7, wherein
the liquid supply device is a sprayer configured to spray the liquid to the blade.

9. The product manufacturing apparatus according to any one of claim 1 through claim 7, wherein
the liquid supply device is a liquid absorbing member in which the liquid is
absorbed, and is capable of coming into contact with the blade.

10. The product manufacturing apparatus according to claim 9, wherein
the liquid absorbing member is arranged on a path along which the blade moves.
